# EUROPÄISCHE PATENTSCHRIFT

(11) **EP 3 088 778 B1**
(45) Veröffentlichungstag und Bekanntmachung des Hinweises auf die Patenterteilung: **03.10.2018**
(21) Anmeldenummer: 16160172.9
(22) Anmeldetag: 14.03.2016
(51) Int. Cl.: F01N 13/08, F16K 11/052, F16K 11/087

(54) **DREIWEGE-KLAPPE MIT GEKRÜMMTER VENTILKLAPPE**
THREE PATH FLAP WITH CURVED VALVE FLAP
CLAPET A TROIS VOIES COMPRENANT UN CLAPET DE SOUPAPE INCURVE

(30) Priorität: 01.05.2015 DE 102015106835
(43) Veröffentlichungstag der Anmeldung: 02.11.2016
(73) Patentinhaber: Eberspächer Exhaust Technology GmbH & Co. KG, 66539 Neunkirchen (DE)
(72) Erfinder: Sühnel, Frank, 73061 Ebersbach/Fils (DE); Kast, Eduard-Horst, 73730 Esslingen (DE); Birgler, Markus, 73249 Wernau (DE); Gaiser, Gerd, 72768 Reutlingen (DE)
(74) Vertreter: Diehl & Partner GbR

(56) Entgegenhaltungen:
- DE-A1- 3 832 598
- DE-A1-102006 032 584
- DE-A1-102009 008 445
- DE-B- 1 204 476
- DE-C1- 19 854 795
- FR-A- 1 343 429
- GB-A- 733 931
- JP-U- S62 194 253
- US-A- 952 691
- US-A- 5 988 220
- US-A1- 2002 189 692
- US-A1- 2005 233 687
- US-A1- 2013 228 247

## Beschreibung

Die vorliegende Anmeldung bezieht sich auf eine Dreiwege-Klappe. Insbesondere bezieht sich die vorliegende Anmeldung auf eine Dreiwege-Abgasklappe, insbesondere zur wahlweisen Zuschaltung bzw. Abkopplung einer Wärmenutzungseinrichtung zu bzw. von einem Abgasstrom in bestimmten Betriebssituationen einer Verbrennungskraftmaschine.

Dreiwege-Klappen werden auch als Dreiwege-Schmetterlingsventile bezeichnet. Dabei sind Dreiwege-Klappen durch das Vorhandensein von genau drei Ein- bzw. Auslässen gekennzeichnet.

Bei der Wärmenutzungseinrichtung kann es sich beispielsweise um einen Latentwärmespeicher, einen nach dem Clausius-Rankine-Kreisprozess arbeitenden Energieerzeuger, einen in einem Organic Rankine Cycle ORC-Prozess betriebenen Schukey-Motor, oder auch einfach einen Wärmetauscher zur Erwärmung von Kühlwasser handeln.

Die Abgasnachbehandlung für Verbrennungsmotoren wird herkömmlich mit passiven Systemen aufgebaut, die in allen Betriebssituationen insgesamt von Abgas durchströmt werden. Beim Durchströmen des Systems unterliegt der Abgasstrom einem gewissen Widerstand, welcher den Gesamtwirkungsgrad des Systems verringert. Zur Verringerung der Emissionen und der Abgasgeräusche bei den verkehrsüblichen Betriebszuständen der unteren Teillast werden umschaltbare Systeme verwendet, bei denen man durch Stellglieder Teile der Abgasanlage verschließt oder abkoppelt und nur Teilbereiche nutzt.

Hierfür ist beispielsweise aus der DE 10 2012 107 839 A1 eine Vier-Wege-Abgasklappe bekannt. Bei dieser vorbekannten Abgasklappe ist es nachteilig, dass sie einen großen Strömungswiderstand aufweist.

Weiter ist es bekannt, mittels der Motorwärme eines Kraftfahrzeugs einen Latentwärmespeicher aufzuladen, und die im Latentwärmespeicher gespeicherte Energie beim Kaltstart wieder frei zu setzen.

Eine Dreiwege-Umlenkeranordnung mit einem Gehäuse mit einem ersten Einlass, einem ersten Auslass und einem zweiten Auslass und mit einem konturierten Ventil ist aus der DE 10 2009 008 445 A1 bekannt. Dabei der erste Einlass ausgebildet ist, ein Fluid aufzunehmen. Das konturierte Ventil ist in dem Gehäuse benachbart dem ersten Einlass angeordnet. Weiter ist das konturierte Ventil selektiv um eine Achse von einer ersten Positionsgrenze zu einer zweiten Positionsgrenze drehbar. Eine vergleichbare Anordnung ist auch aus der US 2013/0228247 A1 bekannt. Ein weiteres Dreiwege-Ventil mit einer gekrümmten Ventilklappe, welche die Form eines Zylindermantelabschnitts aufweist, ist aus der US 2002/0189692 A1 bekannt. Zusammenfassend offenbaren diese Dokumente Merkmale des Oberbegriffs des unabhängigen Anspruchs 1.

Aus der DE 1 204 476 B ist eine Zwei-Wege Umlenkeinrichtung bekannt. Die Umlenkeinrichtung weist einen Einlass und zwei Auslässe und ein drehbares Verschlussteil auf, welches Verschlussteil aus zwei fest miteinander verbundenen Klappen besteht, von denen jeweils eine in den beiden Endlagen der Umlenkeinrichtung einen der beiden Auslässe verschließt. Bei dieser Umlenkeinrichtung wird jeweils die Klappe, die sich in Offenlage befindet, vom Medium beidseitig umströmt, und der beiden Klappen gemeinsame Schwenkpunkt ist so weit in Durchflussrichtung stromabwärts angeordnet, dass die vom durchfließenden Medium auf die beiden Klappen ausgeübte Kraft bei der Annäherung an die Schließlage ein in Schließrichtung wirkendes Moment ausübt. Dadurch, dass jeweils die Klappe, die sich in Offenlage befindet, vom Medium beidseitig umströmt wird, kann diese Klappe als zusätzliche Mediumleitwandung oder Mediumumlenkwandung verwendet werden, so dass die Umlenkung oder Umleitung des Mediums mit einem geringstmöglichen Energieverlust erfolgt. Entsprechend kann die als Mediumleitwandung oder Mediumumlenkwandung verwendete Klappe gekrümmt sein.

Ausgehend hiervon ist es Aufgabe der vorliegenden Erfindung, eine Dreiwege-Klappe bereitzustellen, welche auf kostengünstige, einfache und robuste Weise die wahlweise Zuschaltung von Abschnitten einer Abgasanlage erlaubt, und dabei einen, verglichen mit vorbekannten Abgasklappen, verringerten Strömungswiderstand aufweist.

Ausführungsformen einer Dreiwege-Klappe weisen einen Einlass, einen ersten Auslass, einen zweiten Auslass und eine Ventilklappe auf. Dabei ist die Ventilklappe wenigstens zwischen einer ersten und einer zweiten Position verstellbar. In der ersten Position der Ventilklappe wird durch den Einlass einströmendes Fluid überwiegend zum ersten Auslass geleitet. In der zweiten Position der Ventilklappe wird durch den Einlass einströmendes Fluid überwiegend zum zweiten Auslass geleitet. Dabei bedeutet "überwiegend", dass mehr als 90 Volumenprozent des über den Einlass in die Dreiwege-Klappe zugeführten Fluids zu dem jeweiligen Auslass geführt werden. Dabei ist die Ventilklappe nicht plan alle Punkte der Ventilklappe liegen in einer Ebene, sondern weist eine von einem Außenrand begrenzte Oberfläche der Ventilklappe wenigstens einen ersten Flächenabschnitt eine Krümmung auf womit nicht alle Punkte der Ventilklappe in einer Ebene liegen.

Diese Krümmung der Ventilklappe erlaubt es, dem Fluid im Inneren der Dreiwege-Klappe einen, verglichen mit herkömmlichen Dreiwege-Klappen mit planer Ventilklappe, größeren Strömungsquerschnitt bereit zu stellen. In der Folge ist der Strömungswidersand der Dreiwege-Klappe verglichen mit herkömmlichen Dreiwege-Klappen herabgesetzt. Dabei kann die Krümmung in eine Richtung oder in mehrere unterschiedliche (insbesondere zueinander orthogonale) Richtungen verlaufen.

Gemäß einer Ausführungsform weist die Ventilklappe eine von dem Außenrand begrenzte und dem Einlass zugewandte erste Oberfläche auf, welche wenigstens im ersten Flächenabschnitt konkav ist.

Gemäß einer Ausführungsform weist die Ventilklappe eine von dem Außenrand begrenzte und dem Einlass zugewandte erste Oberfläche auf, welche wenigstens im ersten Flächenabschnitt einer inneren Mantelfläche eines Zylindersegments entspricht oder welche wenigstens im ersten Flächenabschnitt einer inneren Fläche eines Kugelsegments entspricht.

Somit weist die Ventilklappe einen Bauch auf, der von dem Einlass abgewandt ist, so dass ein vom Außenrand der Ventilklappe aufgespanntes Volumen hin zum Einlass offen ist.

Gemäß einer Ausführungsform weist die Ventilklappe eine von dem Außenrand begrenzte und dem Einlass abgewandte zweite Oberfläche auf, welche von der ersten Oberfläche beabstandet ist und welche wenigstens im ersten Flächenabschnitt konvex ist.

Gemäß einer Ausführungsform weist die Ventilklappe eine von dem Außenrand begrenzte und dem Einlass abgewandte zweite Oberfläche auf, welche von der ersten Oberfläche beabstandet ist und welche wenigstens im Bereich des ersten Flächenabschnitts einer äußeren Mantelfläche eines Zylindersegments entspricht oder welche wenigstens im Bereich des ersten Flächenabschnitts einer äußeren Fläche eines Kugelsegments entspricht.

Gemäß einer Ausführungsform ist der Abstand zwischen der ersten und der zweiten Oberfläche über die ganze Erstreckung der Ventilklappe konstant, so dass die Ventilklappe eine konstante Dicke aufweist.

Gemäß einer Ausführungsform weist die Ventilklappe eine von dem Außenrand begrenzte und dem Einlass zugewandte erste Oberfläche und eine von dem Außenrand begrenzte und dem Einlass abgewandte zweite Oberfläche auf, wobei die zweite Oberfläche von der ersten Oberfläche beabstandet ist. Dabei ist eine gerade Verbindungsstrecke (Verbindungsgerade) zwischen zwei Punkten auf dem Außenrand um wenigstens 5 % oder um wenigstens 10 % oder um wenigstens 20 % kürzer als die kürzeste in der ersten Oberfläche liegende Verbindungslinie zwischen diesen beiden Punkten.

Gemäß einer Ausführungsform weist die Krümmung der Ventilklappe wenigstens im ersten Flächenabschnitt einen Krümmungsradius kleiner 1,00 m oder einen Krümmungsradius kleiner 0,50 m oder einen Krümmungsradius kleiner 0,25 m auf.

Gemäß einer Ausführungsform weist die Ventilklappe einen zweiten Flächenabschnitt und einen dritten Flächenabschnitt auf. Dabei ist der erste Flächenabschnitt zwischen dem zweiten und dem dritten Flächenabschnitt angeordnet. Weiter ist die Krümmung der Ventilklappe im zweiten und dritten Flächenabschnitt von der Krümmung im ersten Flächenabschnitt verschieden oder gleich Null.

Somit kann sich die Ventilklappe in unterschiedlichen Abschnitten unterschiedliche Krümmungen aufweisen. Der Übergang zwischen den unterschiedlichen Krümmungen kann stetig oder unstetig sein. Gemäße einer Ausführungsform ist die dem Einlass der Ventilklappe zugewandte Oberfläche der Ventilklappe jedoch stetig.

Gemäß einer Ausführungsform weist die Ventilklappe im ersten Flächenabschnitt die Form eines Kugelsegments auf, und weist die Ventilklappe im zweiten und dritten Flächenabschnitt jeweils die Form eines Kegelstumpfsegments auf.
Gemäß einer alternativen Ausführungsform weist die Ventilklappe im ersten Flächenabschnitt die Form eines Zylindersegments auf, und weist die Ventilklappe im zweiten und dritten Abschnitt jeweils keine Krümmung auf.
Gemäß einer Ausführungsform ist die Ventilklappe ausgebildet, um eine Schwenkachse gedreht zu werden. Dann erstreckt sich der erste Flächenabschnitt bezogen auf die Schwenkachse über einen ersten Winkel von zwischen 50° und 130°, und erstreckt sich der zweite und dritte Flächenabschnitt jeweils über einen zweiten Winkel, wobei der zweite Winkel gleich der halben Differenz zwischen 180° und dem ersten Winkel ist.
Gemäß einer Ausführungsform erstreckt sich der erste Flächenabschnitt bezogen auf die Schwenkachse über zwischen 50° und 130°, und erstreckt sich der zweite und dritte Flächenabschnitt jeweils über zwischen 65° und 25°.
Gemäß einer alternativen Ausführungsform erstreckt sich der erste Flächenabschnitt bezogen auf die Schwenkachse über zwischen 60° und 120°, und erstreckt sich der zweite und dritte Flächenabschnitt jeweils über zwischen 60° und 30°.
Gemäß einer alternativen Ausführungsform erstreckt sich der erste Flächenabschnitt bezogen auf die Schwenkachse über 76°, und erstreckt sich der zweite und dritte Flächenabschnitt jeweils über 52°.
Gemäß einer alternativen Ausführungsform erstreckt sich der erste Flächenabschnitt bezogen auf die Schwenkachse über 90°, und erstreckt sich der zweite und dritte Flächenabschnitt jeweils über 45°.
Gemäß einer Ausführungsform erstreckt sich der erste Flächenabschnitt bezogen auf die Schwenkachse über 120°, und erstreckt sich der zweite und dritte Flächenabschnitt jeweils über 30°.

Gemäß einer Ausführungsform weist die Dreiwege-Klappe weiter einen Ventilkorpus auf, wobei die Ventilklappe im Inneren des Ventilkorpus angeordnet ist, und der Einlass und der erste und zweite Auslass in dem Ventilkorpus ausgebildet sind. Damit legt der Ventilkorpus das von der Dreiwege-Klappe umschlossene Volumen fest.
Gemäß einer Ausführungsform ist der Ventilkorpus aus Metall oder Kunststoff gebildet. Gemäß einer Ausführungsform ist das von dem Ventilkorpus umschlossene Volumen sphärisch oder kubisch. Beispielsweise kann der Ventilkorpus ein quaderförmiges oder kugelförmiges Innenvolumen begrenzen. Alternativ kann der Ventilkorpus beispielsweise auch ein Innenvolumen begrenzen, welches aus zwei oder drei Zylindern, die sich teilweise überlappen, zusammengesetzt ist.
Gemäß einer Ausführungsform weist der Ventilkorpus in seinem Inneren Dichtanschläge für die Ventilklappe auf.

Gemäß der Erfindung durchsetzt eine Schwenkachse der Ventilklappe den Ventilkorpus geradlinig. Weiter trägt die Schwenkachse ein gekrümmtes Leitblech. Beispielsweise kann die Schwenkachse stabförmig ausgebildet sein. Eine derartige durchgehende Welle erhöht die Stabilität der Dreiwege-Klappe, und weist verglichen mit zwei unterschiedlichen Lagern reduzierte Toleranzanforderungen auf.
Das Leitblech dient dazu, eine Strömung des Fluids über den ganzen Querschnitt der Dreiwege-Klappe zu verteilen, und Stauungen zu vermeiden. Weiter hilft das Leitblech, Turbulenzen, die von der Schwenkachse hervorgerufen werden, zu unterdrücken. Da das Leitblech an der Schwenkachse befestigt ist, wird es bei einem Verschwenken der Ventilklappe gemeinsam mit der Ventilklappe verschwenkt und ist damit bezogen auf die Ventilklappe drehfest. Auf diese Weise ist sichergestellt, dass das Leitblech eine an die jeweilige Stellung der Ventilklappe angepasste Orientierung aufeist.
Gemäß einer Ausführungsform weist das Leitblech dann eine dem Einlass zugewandte Oberfläche auf, welche konkav ist.
Gemäß einer Ausführungsform weist das Leitblech dann eine dem Einlass zugewandte Oberfläche auf, welche einer inneren Mantelfläche eines Zylindersegments oder einer inneren Fläche eines Kugelsegments entspricht.
Die Krümmung des Leitblechs kann der Krümmung der Ventilklappe entsprechen, oder von dieser abweichen. Insbesondere kann die Krümmung des Leitblechs um einen Faktor größer als die Krümmung der Ventilklappe sein, und damit durch Skalieren der Krümmung der Ventilklappe gewonnen werden.

Gemäß einer alternativen, nicht beanspruchten, Ausführungsform durchsetzt die Schwenkachse der Ventilklappe den Ventilkorpus nicht, sondern ist die Ventilklappe an zwei sich gegenüberliegenden Punkten über separate Lager in dem Ventilkorpus gelagert. Dieser Verzicht auf eine den Ventilkorpus durchsetzende Schwenkachse vermeidet Turbulenzen und reduziert damit den Strömungswiderstand der Dreiwege-Klappe.
Gemäß einer Ausführungsform weist die Ventilklappe auf einer von dem Außenrand begrenzten und dem Einlass abgewandten zweiten Oberfläche wenigstens einen Vorsprung auf. Dieser Vorsprung kann ausgebildet sein, in wenigstens einer Position der Ventilklappe mit einer Innenwand des Ventilkorpus in Anlage zu kommen.
Auf diese Weise kann eine Anlage der Ventilklappe an eine Innenwand des Ventilkorpus auf einen kleinen Bereich beschränkt werden, so dass die Ventilklappe sonst bezogen auf den Ventilkorpus ein größeres Spiel aufweisen kann. Weiter kann so erreicht werden, dass es nur in bestimmten Positionen zu einer Anlage der Ventilklappe an einer Innenwand des Ventilkorpus kommt.
Gemäß einer Ausführungsform weist die Ventilklappe auf ihrer von dem Außenrand begrenzten und dem Einlass abgewandten zweiten Oberfläche genau zwei Vorsprünge auf, welche bezogen auf eine Schwenkachse der Ventilklappe miteinander einen Winkel von 90° einschließen.
Gemäß einer Ausführungsform weist die Ventilklappe auf einer von dem Außenrand begrenzten und dem Einlass zugewandten ersten Oberfläche eine dem Vorsprung entsprechende Dicke auf.

Gemäß der Erfindung weist der Ventilkorpus seiner dem Einlass gegenüberliegenden Innenwand einen Vorsprung auf, der hin zum Einlass orientiert ist und sich zwischen zwei Lagern, welche ausgebildet sind eine Schwenkbewegung der Ventilklappe zu ermöglichen,
erstreckt.

Auch auf diese Weise kann eine Anlage der Ventilklappe an eine Innenwand des Ventilkorpus auf einen kleinen Bereich beschränkt werden, so dass die Ventilklappe sonst bezogen auf den Ventilkorpus ein größeres Spiel aufweisen kann.

Gemäß einer Ausführungsform ist das von der Dreiwege-Klappe geführte Fluid Abgas, welches dem Eingang der Dreiwege-Klappe von einem Verbrennungsmotor zugeführt wird. Dann ist die Dreiwege-Klappe eine Dreiwege-Abgasklappe, deren Eingang mit einem Auslass für Abgas eines Verbrennungsmotors in Fluidverbindung gebracht werden kann.

Gemäß einer Ausführungsform weist die Krümmung der Ventilklappe im ersten Flächenabschnitt keinen Vorzeichenwechsel auf.

Gemäß einer Ausführungsform ist die Krümmung der Ventilklappe im ersten Flächenabschnitt stetig.

Gemäß einer Ausführungsform weist die Ventilklappe im ersten Flächenabschnitt eine im mathematischen Sinn gewölbte reguläre Fläche auf. Gemäß einer alternativen Ausführungsform weist die Ventilklappe im ersten Flächenabschnitt eine im mathematischen Sinn gekrümmte Fläche auf.

Gemäß einer Ausführungsform ist die Ventilklappe aus einem biegesteifen Material und insbesondere aus Blechmaterial gebildet.

Auch wenn die vorstehend beschriebene Dreiwege-Klappe einen Einlass und zwei Auslässe aufweist, ist es alternativ möglich, die Funktionalität der Einlässe und Auslässe zu vertauschen. Somit kann alternativ der eine Einlass einen Auslass bilden, und können die beiden Auslässe zwei Einlässe bilden.

Gemäß einer Ausführungsform schließen der erste Auslass und der zweiten Auslass mit dem Einlass jeweils einen Winkel von 90° ein, und schließen der erste und der zweite Auslass miteinander einen Winkel von 180° ein. Gemäß einer alternativen Ausführungsform schließen der erste Auslass und der zweite Auslass mit dem Einlass jeweils einen Winkel von 60° ein, und schließen der erste und der zweite Auslass miteinander einen Winkel von 120° ein.

Gemäß einer Ausführungsform liegen der erste Auslass und der zweite Auslass und der Einlass in einer gemeinsamen Ebene. Alternativ können der erste Auslass und der zweite Auslass und der Einlass auch im Raum verteilt angeordnet sein.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung eines Ausführungsbeispiels der Erfindung wird auf die beiliegenden Figuren Bezug genommen, von denen
- Figuren 1A, 1B, 1C: schematisch eine Dreiwege-Klappe gemäß einer ersten Ausführungsform in zwei perspektivischen Ansichten sowie in einer Aufsicht zeigen, wobei eine Wandung eines Ventilkorpus der Dreiwege-Klappe transparent dargestellt ist;
- Figuren 2A, 2B, 2C: schematisch eine Dreiwege-Klappe gemäß einer zweiten Ausführungsform in zwei perspektivischen Ansichten sowie in einer Aufsicht zeigen, wobei eine Wandung eines Ventilkorpus der Dreiwege-Klappe transparent dargestellt ist;
- Figuren 3A, 3B, 3C: schematisch eine Dreiwege-Klappe gemäß einer dritten Ausführungsform in zwei perspektivischen Ansichten sowie in einer Aufsicht zeigen, wobei eine Wandung eines Ventilkorpus der Dreiwege-Klappe transparent dargestellt ist;
- Figuren 4A, 4B, 4C: schematisch eine Dreiwege-Klappe in Aufsicht zeigen, wobei eine Wandung eines Ventilkorpus der Dreiwege-Klappe transparent dargestellt ist;
- Figuren 5A, 5B, 5C: schematisch eine vierte Ausführungsform einer Dreiwege-Klappe in zwei perspektivischen Ansichten sowie einer Aufsicht zeigen, wobei eine Wandung eines Ventilkorpus der Dreiwege-Klappe transparent dargestellt ist;
- Figuren 6A, 6B, 6C: schematisch eine Dreiwege-Klappe gemäß einer fünften Ausführungsform in zwei perspektivischen Ansichten sowie einer Aufsicht zeigen, wobei eine Wandung eines Ventilkorpus der Dreiwege-Klappe transparent dargestellt ist;
- Figuren 7A, 7B: schematisch eine Dreiwege-Klappe in einer perspektivischen Ansicht zeigen, wobei eine Wandung eines Ventilkorpus der Dreiwege-Klappe transparent dargestellt ist;
- Figuren 8A, 8B: schematisch eine Dreiwege-Klappe in perspektivischer Ansicht zeigen, wobei eine Wandung des Ventilkorpus transparent dargestellt ist, und ein Abschnitt vergrößert dargestellt ist;
- Figuren 9A, 9B: schematisch perspektivisch zwei alternativ gelagerte Ventilklappen zeigen, welche in einer der vorstehenden Ausführungsformen verwendet werden können;
- Figuren 10A, 10B, 10C: schematisch in zwei perspektivischen Ansichten sowie einer Aufsicht eine Dreiwege-Klappe gemäß einer sechsten Ausführungsform zeigen, wobei in den beiden perspektivischen Darstellungen sowie der Aufsicht die Ventilklappe jeweils eine unterschiedliche Schwenkposition einnimmt und eine Wandung eines Ventilkorpus der Dreiwege-Klappe transparent dargestellt ist;
- Figuren 11A, 11B, 11C: schematisch ein Blockdiagramm eines Abschnitts einer Abgasanlage eines Kraftfahrzeugs in unterschiedlichen Betriebszuständen zeigen, in welcher die Dreiwege-Klappe gemäß einer der vorstehenden Ausführungsformen verwendet wird; und
- Figur 12: schematisch eine Dreiwege-Klappe gemäß einer siebten Ausführungsform zeigt.

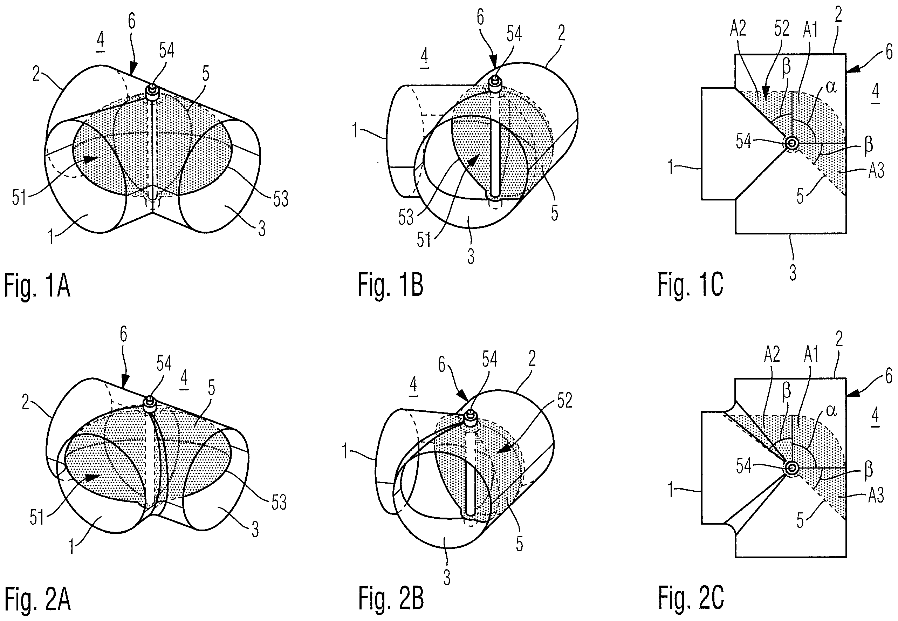

Im Folgenden wird unter Bezugnahme auf die Figuren 1A, 1B und 1C eine erste Ausführungsform einer Dreiwege-Klappe 4 am Beispiel einer Dreiwege-Abgasklappe beschrieben.

Die Dreiwege-Abgasklappe weist einen Ventilkorpus 6 auf, der ein Innenvolumen der Dreiwege-Klappe 4 festlegt und so das Gehäuse der Dreiwege-Klappe 4 bildet.

In der gezeigten Ausführungsform ist der Ventilkorpus aus zwei T-förmig angeordneten Rohren aus Stahlblech gebildet. Ein sich geradlinig erstreckendes erstes Rohr legt einen ersten Auslass 2 und einen zweiten Auslass 3 fest, wobei der erste und zweite Auslass 2, 3 sich gegenüber liegen und damit miteinander einen Winkel von 180° einschließen. Ein in einem Winkel von 90° zu diesem ersten Rohr angesetztes zweites Rohr legt einen Einlass 1 fest. Somit schließt der Einlass 1 mit dem ersten und zweiten Auslass 2, 3 jeweils ein Winkel von 90° ein und liegen der Einlass 1 und der erste und zweite Auslass 2, 3 in einer gemeinsamen Ebene.

In seinem Inneren nimmt der Ventilkorpus 6 eine gekrümmte Ventilklappe 5 aus einem biegesteifen Blechmaterial auf. Dabei ist die Ventilklappe 5 über eine Schwenkachse 54, welche den Ventilkorpus 6 in der gezeigten Ausführungsform geradlinig durchsetzt, zwischen einer ersten und einer zweiten Position verstellbar. In der ersten Position leitet die Ventilkappe 5 durch den Einlass 1 einströmendes Abgas zum ersten Auslass 2, und in der zweiten Position (welche auch in den Figuren 1A bis 1C gezeigt ist) leitet die Ventilklappe 5 durch den Einlass 1 einströmendes Abgas zum zweiten Auslass 3. Die Ventilklappe 5 kann auch Zwischenpositionen einnehmen. Die Lagerung der Schwenkachse 54 erfolgt in der gezeigten Ausführungsform über zwei Lager, die an gegenüberliegenden Enden der Schwenkachse 54 außen am Ventilkorpus 6 vorgesehen sind. Die Lager werden jeweils von einer Lagerbuchse, einer Grafitbuchse und einer Einstellschraube gebildet, und sind somit Gleitlager. In der gezeigten Ausführungsform erfolgt eine Betätigung der Ventilklappe 5 von außen. Alternativ kann die Ventilklappe 5 aber beispielsweise auch unter Verwendung eines Gegendrucks selbstschaltend ausgebildet sein.

Weiter ist die Ventilklappe 5 so gekrümmt, dass eine von einem Außenrand 53 begrenzte erste Oberfläche 51, welche dem Einlass 1 zugewandt ist, eine Krümmung ihrer Fläche aufweist. Ersichtlich weist die Krümmung der Ventilklappe 5 keinen Vorzeichenwechsel auf und ist die dem Einlass 1 zugewandte erste Oberfläche 51 der Ventilklappe 5 stetig. Dies bedeutet jedoch nicht, dass die Krümmung der ersten Oberfläche 51 über die ganze erste Oberfläche 51 der Ventilklappe 5 konstant ist. Vielmehr weist die Ventilklappe 5 in der gezeichneten Ausführungsform in einem ersten Flächenabschnitt A1 der ersten Oberfläche 51, welcher erste Flächenabschnitt sich bezogen auf die Schwenkachse 54 über ein Winkel α von 90° erstreckt, eine Krümmung in zwei zueinander orthogonalen Richtungen auf. In dem ersten Flächenabschnitt A1 ist die Krümmung einem Kugelsegment nachempfunden. Da die Ventilklappe 5 in der gezeigten Ausführungsform eine über ihre ganze Fläche konstante Materialstärke aufweist, entspricht die dem Einlass 1 zugewandte erste Oberfläche im ersten Abschnitt A1 der inneren Mantelfläche eines Kugelsegments und die dem Einlass 1 abgewandte zweite Oberfläche 52 im Bereich des ersten Flächenabschnitts A1 einer äußeren Mantelfläche eines Kugelsegments. In einem dem ersten Flächenabschnitt A1 benachbarten zweiten und dritten Flächenabschnitt A2, A3, welche sich bezogen auf die Schwenkachse 54 jeweils über ein Winkel β von 45° erstrecken, weist die erste Oberfläche 51 nur in einer Richtung eine Krümmung auf. Tatsächlich ist die erste Oberfläche 51 der Ventilklappe 5 im zweiten und dritten Flächenabschnitt A2, A3 jeweils der Mantelfläche eines Kegelstumpfes nachempfunden. Somit ist der erste Flächenabschnitt A1 zwischen zweitem und drittem Flächenabschnitt A2, A3 angeordnet und weist die Ventilklappe 5 im zweiten und dritten Flächenabschnitt eine Krümmung auf, die von der Krümmung im ersten Flächenabschnitt verschieden ist.

Diese Krümmung der Ventilklappe 5 führt dazu, dass eine gerade Verbindungsstrecke zwischen zwei Punkten auf ihrem Außenrand 53 um wenigstens 5 % kürzer als die kürzeste in der ersten Oberfläche 51 liegende Verbindungslinie zwischen diesen beiden Punkten ist, sofern sich die Punkte auf dem Außenrand 53 bezogen auf die Schwenkachse 54 gegenüber liegen.

In der gezeigten Ausführungsform ist die Krümmung der dem Einlass 1 zugewandten ersten Oberfläche 51 so gewählt, dass sie sowohl im ersten, zweiten als auch dritten Abschnitt A1, A2, A3 in einer Richtung einen Krümmungsradius von 25 mm aufweist.

Es wird betont, dass die vorliegende Erfindung nicht auf die vorstehende Krümmung der Ventilklappe beschränkt ist. Vielmehr ist es ausreichend, wenn die Ventilklappe wenigstens in einem ersten Flächenabschnitt eine im mathematischen Sinn gewölbte reguläre Fläche aufweist oder im mathematischen Sinn gekrümmte Fläche aufweist.

Ersichtlich ist in der gezeigten Ausführungsform die dem Einlass 1 zugewandte erste Oberfläche 51 durchgehend konkav und entsprechend die von der ersten Oberfläche 51 um die Dicke der Ventilklappe 5 beabstandete und dem Einlass 1 abgewandte zweite Oberfläche 52 durchgehend konvex. Anders ausgedrückt ist die Ausbuchtung der Ventilklappe 5 zum Einlass 1 hin offen.

Diese Orientierung der Ventilkappe 5 führt zusammen mit der Krümmung dazu, dass von der Dreiwege-Klappe 4 geführtem Abgas ein großer freier Strömungsquerschnitt bereitgestellt wird, so dass die Dreiwege-Klappe 4 einen besonders geringen Strömungswiderstand aufweist.

Im Folgenden wird unter Bezugnahme auf die Figuren 2A, 2B und 2C eine zweite Ausführungsform einer Dreiwege-Klappe 4 beschrieben. Dabei wird zur Vermeidung von Wiederholungen nur auf Unterschiede zu der vorstehend beschriebenen ersten Ausführungsform eingegangen und ansonsten auf die Ausführungen zur ersten Ausführungsform verwiesen.

Wie auch in der vorstehend beschriebenen ersten Ausführungsform weist die Dreiwege-Klappe 4 einen Ventilkorpus 6 auf, welcher insgesamt T-förmig ist und zwei sich gegenüberliegende erste und zweite Auslässe 2, 3 und einen bezogen auf diese ersten und zweiten Auslässe 2, 3 um 90° verdrehten Einlass 1 aufweist. Jedoch ist der Ventilkorpus 6 in dieser Ausführungsform nicht aus zwei T-förmig angeordneten Rohren, sondern aus zwei Halbschalen aus Blech gebildet. Zudem sind die Ecken im Übergangsbereich zwischen dem Einlass 1 und den ersten und zweiten Auslässen 2,3 verrundet, um Verwirbelungen von Abgas zu vermeiden.

Weiter unterscheidet sich die zweite Ausführungsform von der vorstehend beschriebenen ersten Ausführungsform dadurch, dass sich der zweite und dritte Abschnitt A2, A3 jeweils über einen vergrößerten Winkel β von 48° erstrecken, während sich der dazwischenliegende erste Abschnitt A1 weiterhin über einen Winkel α von 90° erstreckt. Die Winkel α und β sind wiederum auf die Schwenkachse 54 bezogen. Gemeinsam mit einer gegenüber der ersten Ausführungsform verlängerten Ausgestaltung der zweiten und dritten Abschnitte A2, A3 kann so erreicht werden, dass die Ventilklappe 5 in ihren Extremstellungen trotz der Verrundungen der Ecken zwischen dem Einlass 1 und den ersten und zweiten Auslässen 2, 3 eine gute Dichtwirkung für geführtes Fluid erzielt.

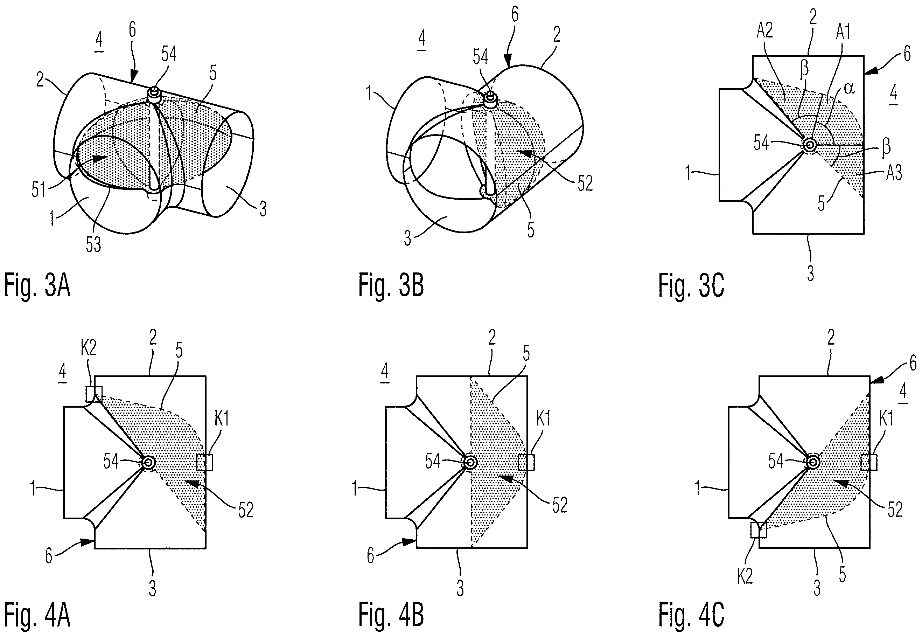

Im Folgenden wird unter Bezugnahme auf die Figuren 3A, 3B und 3C eine dritte Ausführungsform einer Dreiwege-Klappe 4 beschrieben. Auch hier wird zur Vermeidung von Wiederholungen auf die Ausführungen zur ersten Ausführungsform verwiesen und ansonsten nur auf Unterschiede eingegangen.

Die in den Figuren 3A bis 3C gezeigte dritte Ausführungsform unterscheidet sich von der vorstehend beschriebenen ersten Ausführungsform dadurch, dass die Ecken im Übergang zwischen dem Einlass 1 und den ersten und zweiten Auslässen 2, 3 jeweils eine Fase aufweisen. Weiter erstreckt sich der erste Abschnitt A1 der Ventilklappe 5 in der dritten Ausführungsform bezogen auf die Schwenkachse 54 über einen verkleinerten Winkel α von 76°. Zudem erstrecken sich die zweiten und dritten Flächenabschnitte A2, A3, zwischen denen der erste Flächenabschnitt A1 angeordnet ist, jeweils bezogen auf die Schwenkachse 54 über einen vergrößerten Winkel β von 52°. Auch hierdurch ist es möglich, sicherzustellen, dass die Ventilklappe 5 in ihren Extremstellungen trotz der Fasen in den Ecken zwischen dem Einlass 1 und den ersten und zweiten Auslässen 2, 3 eine gute Dichtwirkung für geführtes Fluid erzielt.

Die Möglichkeiten der Abdichtung der Ventilklappe 5 gegenüber einer Innenwand des Ventilkorpus 6 sind in den Figuren 4A, 4B und 4C schematisch dargestellt. Dabei zeigen die Figuren 4A bis 4C jeweils die Dreiwege-Klappe 4 in Aufsicht, wobei eine Wandung des Ventilkorpus 6 transparent dargestellt ist. Die Ventilklappe 5 ist in den unterschiedlichen Figuren 4A, 4B und 4C in drei unterschiedlichen Schwenkpositionen gezeigt.

In der Figur 4A ist die Ventilklappe 5 so orientiert, dass eine Fluidverbindung zwischen dem Einlass 1 und dem zweiten Auslass 3 bereitgestellt wird. Dabei kommt die Ventilklappe 5 in Positionen K1 und K2 mit einer Innenwand des Ventilkorpus 6 in Anlage und dichtet so gegenüber dem Ventilkorpus 6 ab.

In der Figur 4B ist die Ventilklappe 5 so orientiert, dass der Einlass 1 gleichzeitig sowohl mit dem ersten Auslass 2 als auch mit dem zweiten Auslass 3 in Fluidverbindung steht. In dieser Stellung kommt die Ventilklappe 5 nur in der Position K1 mit der Innenwand des Ventilkorpus 6 in Anlage.

In der Figur 4C ist die Ventilklappe 5 so orientiert, dass eine Fluidverbindung zwischen dem Einlass 1 und dem ersten Auslass 2 bereitgestellt wird. In dieser Stellung kommt die Ventilklappe 5 an den Positionen K1 und K2 mit der Innenwand des Ventilkorpus 6 in Anlage und stellt so eine Abdichtung gegenüber dem Ventilkorpus 6 her.

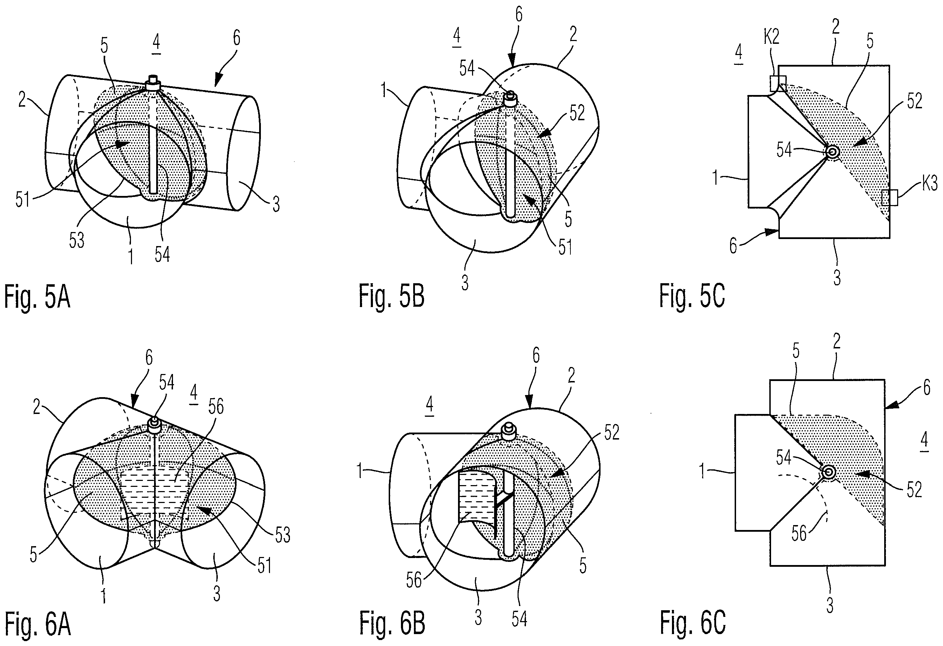

Im Folgenden wird unter Bezugnahme auf die Figuren 5A, 5B und 5C eine vierte Ausführungsform der Dreiwege-Klappe 4 beschrieben. Dabei wird zur Vermeidung von Wiederholungen auf die Ausführungen zu den vorstehenden Ausführungsformen verwiesen und ansonsten nur auf Unterschiede eingegangen.

Im Unterschied zu den vorstehend beschriebenen Ausführungsformen ist bei der vierten Ausführungsform die Krümmung der Ventilklappe 5 im ersten Flächenabschnitt A1 mit einem deutlich vergrößerten Krümmungsradius so gewählt, dass die Ventilklappe 5 nur in ihrer Extremstellung in ihren beiden Endabschnitten K2 und K3 mit einer Innenwand des Ventilkorpus 6 in Anlage kommt. Somit kommt die Ventilklappe 5 in keiner Betriebsstellung mit einem mittleren Abschnitt K1 mit einer Innenwand des Ventilkorpus 6 in Anlage, wie es in der vorstehend beschriebenen ersten bis dritten Ausführungsform der Fall ist. Dies erlaubt größere Fertigungstoleranzen im Bezug auf die Abstimmung der Ventilklappe 5 auf den Ventilkorpus 6. Zudem wird die Leichtgängigkeit der Ventilkappe 5 verbessert.

Im Folgenden wird unter Bezugnahme auf die Figuren 6A, 6B und 6C eine fünfte Ausführungsform einer Dreiwege-Klappe 4 beschrieben. Dabei wird zur Vermeidung von Wiederholungen auf die Ausführung zur ersten Ausführungsform verwiesen und ansonsten nur auf Unterschiede eingegangen.

Die Dreiwege-Klappe 4 gemäß der fünften Ausführungsform unterscheidet sich von der Dreiwege-Klappe 4 gemäß der ersten Ausführungsform dadurch, dass die Schwenkachse 54, welche den Ventilkorpus 6 geradlinig durchsetzt, ein gekrümmtes Leitblech 56 trägt. Das Leitblech 56 wird somit bei einer Verschwenkung der Ventilklappe 5 mitverschwenkt. Dabei ist die Krümmung des Leitbleches 56 der Krümmung der Ventilklappe 5 angepasst. Somit ist die dem Einlass 1 zugewandte Oberfläche des Leitbleches 56 konkav gekrümmt und entspricht der inneren Mantelfläche eines Kugelsegments.

Das Leitblech führt einen Teil der von der Dreiwege-Klappe geführten Abgasströmung, so dass nicht die gesamte Abgasströmung an der Ventilklappe 5 anliegt. Turbulenzen in der Abgasströmung können durch das Leitblech ebenfalls verringert werden.

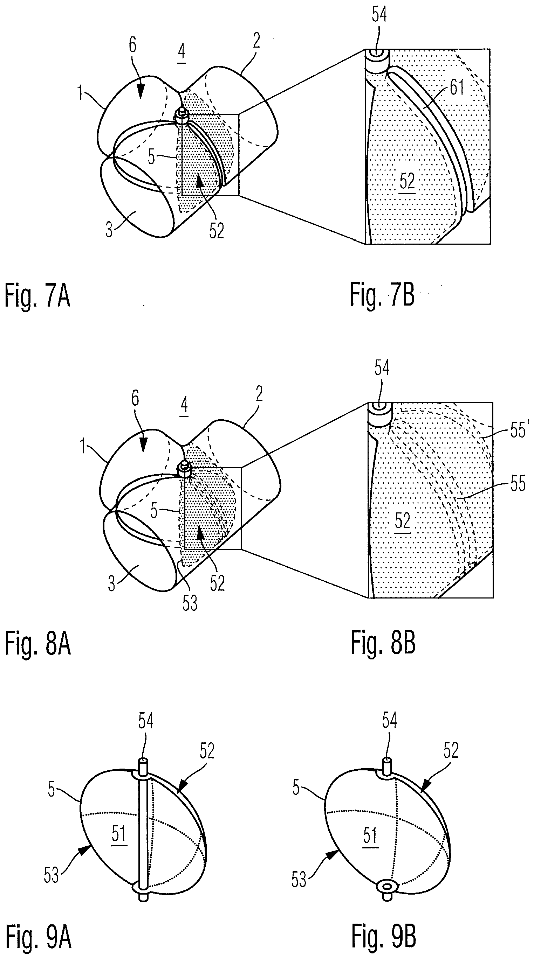

Im Folgenden wird unter Bezugnahme auf die Figuren 7A und 7B eine Weiterbildung des Ventilkorpus beschrieben, wie er wahlweise in der vorstehend beschriebenen ersten, zweiten oder dritten Ausführungsform verwendet werden kann.

Dabei zeigt Figur 7A eine perspektivische Ansicht der Dreiwege-Klappe 4, wobei eine Wandung des Ventilkorpus 6 transparent gezeigt ist, und Figur 7B einen vergrößerten Ausschnitt aus der Figur 7A.

Wie insbesondere aus Figur 7B ersichtlich, ist in die Wandung des Ventilkorpus 6 in einem dem Einlass 1 bezüglich der Schwenkachse 54 gegenüberliegenden Bereich ein Vorsprung 61 eingebracht, der hin zum Einlass 1 orientiert ist und sich parallel zur Schwenkachse 54 erstreckt.

Auf diese Weise ist es möglich, eine Anlage der Ventilklappe 5 in dem in den Figuren 4A bis 4C gezeigten Bereich K1 auf einen definierten Bereich zu beschränken. Im Bereich des Vorsprunges kann die Innenwand des Ventilkorpus zudem geeignet beschichtet sein, beispielsweise mit Gummi.

Im Folgenden wird unter Bezugnahme auf die Figuren 8A und 8B eine alternative Ausgestaltung der Ventilklappe 5 beschrieben, wie sie wahlweise in der vorstehend beschriebenen ersten, zweiten oder dritten Ausführungsform verwendet werden kann.

Dabei zeigt Figur 8A eine perspektivische Ansicht der Dreiwege-Klappe 4, wobei eine Wandung des Ventilkorpus 6 transparent dargestellt ist, und Figur 8B einen vergrößerten Ausschnitt aus der Figur 8A.

Wie besonders gut aus Figur 8B ersichtlich, weist die Ventilklappe 5 auf einer von dem Außenrand 53 begrenzten und dem Einlass 1 abgewandten zweiten Oberfläche 52 zwei Vorsprünge 55, 55' auf, welche ausgebildet sind, mit einer Innenwand des Ventilkorpus 6 in Anlage zu kommen. Auf diese Weise kann eine Anlage der Ventilklappe 5 an die Innenwand des Ventilkorpus auf den in den Figuren 4A bis 4C gezeigten mittleren Bereich K1 beschränkt werden. Zudem tritt so eine Anlage nur in den Extremstellungen der Ventilklappe 5 auf. Auch hier können die Vorsprünge 55, 55' eine Beschichtung aufweisen.

In den Figuren 9A und 9B sind zwei alternative Ausführungsformen der Ventilklappe 5 gezeigt, wie sie in einer der vorstehend beschriebenen Ausführungsformen verwendet werden kann.

Dabei zeigt Figur 9A eine perspektivische Ansicht der Ventilklappe 5, welche eine sich geradlinig erstreckende durchgehende Schwenkachse 54 aufweist.

Die Figur 9B zeigt im Gegensatz hierzu eine perspektivische Ansicht einer Ventilklappe 5, welche eine zweiteilige Schwenkachse 54 aufweist. Wird diese Ausgestaltung der Ventilklappe in der fünften Ausführungsform verwendet, so muss das Leitblech von der Ventilklappe selber getragen werden. Somit erstreckt sich die Schwenkachse 54 in der Figur 9B nicht geradlinig durch einen Ventilkorpus hindurch, wodurch ein Strömungswiderstand reduziert wird.

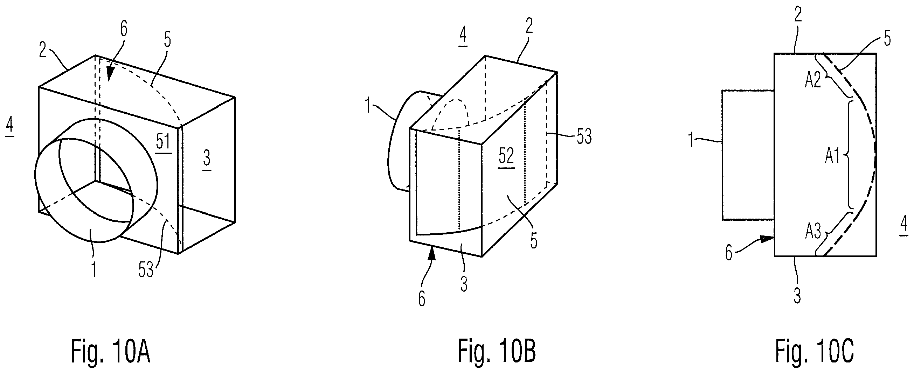

Im Folgenden wird unter Bezugnahme auf die Figuren 10A, 10B und 10C eine weitere Ausführungsform einer Dreiwege-Klappe 4 beschrieben. Dabei zeigen die Figuren 10A und 10B unterschiedliche perspektivische Ansichten der Dreiwege-Klappe 4 und zeigt die Figur 10C eine Aufsicht auf die Dreiwege-Klappe 4, wobei eine Wandung des Ventilkorpus 6 transparent dargestellt ist, und die Ventilklappe 5 unterschiedliche Schwenkstellungen einnimmt. Die Transparenz wird durch die gestrichelte Linie der Ventilklappe 5 kenntlich gemacht.

Anders als in den vorstehend beschriebenen Ausführungsformen ist der Ventilkorpus 6 in der hier gezeigten Ausführungsform nicht aus Rohren zusammengesetzt. Vielmehr umschließt der Ventilkorpus 6 ein quaderförmiges Innenvolumen und ist in einer Seitenwand des Ventilkorpus 6 ein Rohr zur Bereitstellung des Einlasses 1 angesetzt. Der Einlass 6 kann alternativ auch ebenfalls rechteckig ausgeführt sein.

Die in den Figuren 10A bis 10C in unterschiedlichen Positionen gezeigte Ventilklappe 5 weist eine dem Einlass 1 zugewandte und von einem Außenrand 53 begrenzte erste Oberfläche 51 auf, welche in einem zentralen Flächenabschnitt A1 der inneren Mantelfläche eines Zylindersegments entspricht. Da auch in dieser Ausführungsform die Ventilklappe 5 eine konstante Materialstärke aufweist, gilt dies auch für die dem Einlass 1 abgewandte zweite Oberfläche 52. In den dem ersten Flächenabschnitt A1 benachbarten zweiten und dritten Flächenabschnitten A2, A3 weist die Ventilklappe 5 in der gezeigten Ausführungsform keine Krümmung auf. Auch hier ist der erste Flächenabschnitt A1 zwischen dem zweiten und dem dritten Flächenabschnitt A2, A3 angeordnet.

Anders als in den vorstehenden Ausführungsformen ist die Ventilklappe 5 nicht über eine Schwenkachse gelagert, sondern ist in bogenförmigen Führungsnuten geführt, welche in eine obere Wandung und eine untere Wandung des Ventilkorpus 6 eingebracht sind. Derartige Führungsnuten sind bekannt und daher nicht eigens dargestellt. Der Antrieb der Ventilklappe 5 erfolgt von außen über ein Antriebsrad, welches ebenfalls nicht gezeigt ist.

Alternativ ist es aber auch in dieser Ausführungsform möglich, die Ventilklappe über eine Schwenkachse zu lagern. Dann wird der Abstand zwischen der Schwenkachse und der Ventilklappe über Schwenkarme überbrückt.

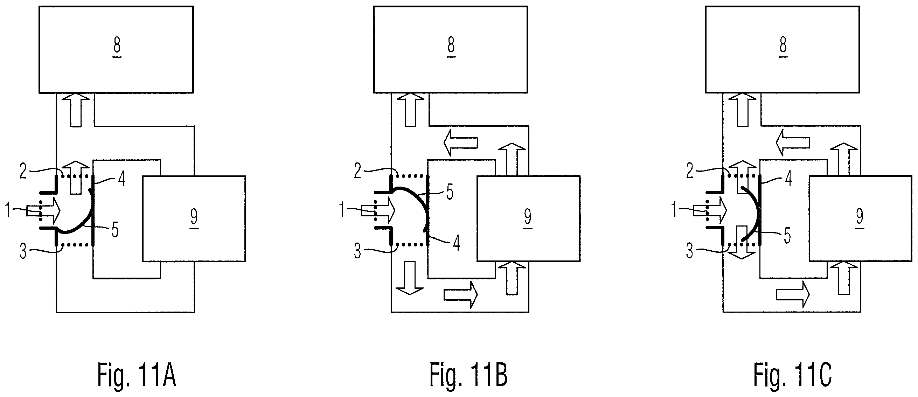

Im Folgenden wird unter Bezugnahme auf die Figuren 11A bis 11C eine mögliche Verwendung der vorstehend beschriebenen Dreiwege-Klappe 4 in einer Abgasanlage eines Kraftfahrzeugs beschrieben. Dabei ist in den Figuren 11A bis 11C eine Strömungsrichtung von geführtem Abgas schematisch durch Pfeile dargestellt.

Wie in der Figur 11A schematisch gezeigt, wird über den Einlass 1 der Dreiwege-Klappe 4 zugeführtes Abgas in einer ersten Stellung der Ventilklappe 5 über den ersten Auslass 2 ausgegeben und direkt einer ersten Komponente 8, wie beispielsweise einem Schalldämpfer einer Abgasanlage, zugeführt.

Wie in der Figur 11B gezeigt, kann über den Einlass 1 zugeführtes Abgas in einer zweiten Stellung der Ventilklappe 5 der Dreiwege-Klappe 4 der ersten Komponente 8 über eine Hilfskomponente 9, wie beispielsweise einen Wärmetauscher oder einen Wärmespeicher zugeführt werden. Hierfür wird über den Einlass 1 zugeführtes Abgas nur über den zweiten Auslass 3 der Dreiwege-Klappe 4 ausgegeben.

Schließlich kann das über den Einlass 1 zugeführte Abgas in einer dritten Stellung der Ventilklappe 5 gleichzeitig über den ersten und zweiten Auslass 2, 3 der Dreiwege-Klappe 4 ausgegeben werden, so dass ein Teil des über den Einlass 1 zugeführten Abgases dem Schalldämpfer 8 direkt zugeführt wird und ein anderer Teil über die Hilfskomponente 9.

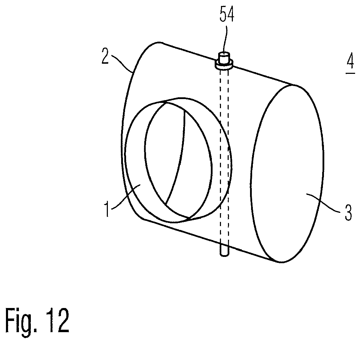

Die Dreiwege-Klappe 4 gemäß der in Figur 12 gezeigten siebten Ausführungsform unterscheidet sich von der Dreiwege-Klappe 4 gemäß der ersten Ausführungsform nur dadurch, dass das sich geradlinig zwischen erstem Auslass 2 und zweitem Auslass 3 erstreckende erste Rohr statt eines kreisrunden einen ovalen Querschnitt aufweist, und das zu diesem ersten Rohr angesetzte zweite Rohr, welches den Einlass 1 festlegt, einen kreisrunden Querschnitt aufweist. Die Form der in Figur 12 nicht sichtbaren Ventilklappe ist an den Querschnitt des ersten Rohres angepasst. Obwohl die voranstehenden Ausführungsbeispiele der vorliegenden Erfindung lediglich beispielhaft erläutert worden sind, werden die Fachleute erkennen, dass zahlreiche Modifikationen, Hinzufügungen und Ersetzungen möglich sind, ohne von dem Schutzbereich der in den nachfolgenden Ansprüchen offenbarten Erfindung abzuweichen.

## Patentansprüche

1. Dreiwege-Klappe (4), mit:
einem Einlass (1);
einem ersten Auslass (2);
einem zweiten Auslass (3); und
einer wenigstens zwischen einer ersten und einer zweiten Position verstellbaren Ventilklappe (5), wobei in der ersten Position der Ventilklappe (5) durch den Einlass (1) einströmendes Fluid zum ersten Auslass (2) geleitet wird, und in der zweiten Position der Ventilklappe (5) durch den Einlass (1) einströmendes Fluid zum zweiten Auslass (3) geleitet wird;
wobei eine von einem Außenrand (53) begrenzte Oberfläche (51) der Ventilklappe (5) wenigstens einen ersten Flächenabschnitt (A1) aufweist, in welchem die Oberfläche der Ventilklappe (5) eine Krümmung aufweist;
wobei die Dreiwege-Klappe (4) weiter einen Ventilkorpus (6) aufweist;
wobei die Ventilklappe (5) im Inneren des Ventilkorpus (6) angeordnet ist, und der Einlass (1) und der erste und zweite Auslass (2, 3) in dem Ventilkorpus (6) ausgebildet sind; und
wobei eine Schwenkachse (54) der Ventilklappe (5) den Ventilkorpus (6) geradlinig durchsetzt;
**dadurch gekennzeichnet, dass**
die Schwenkachse (54) ein gekrümmtes Leitblech (56) trägt; und
der Ventilkorpus (6) an seiner dem Einlass gegenüberliegenden Innenwand einen Vorsprung (61) aufweist, der hin zum Einlass (1) orientiert ist und sich zwischen zwei Lagern erstreckt, welche eine Schwenkbewegung der Ventilklappe (5) ermöglichen, sodass eine Anlage der Ventilklappe (5) an eine Innenwand des Ventilkorpus (6) auf einen kleinen Bereich beschränkt wird.

2. Dreiwege-Klappe (4) nach Anspruch 1,
wobei die Ventilklappe (5) eine von dem Außenrand (53) begrenzte und dem Einlass (1) zugewandte erste Oberfläche (51) aufweist, welche wenigstens im ersten Flächenabschnitt konkav ist; und/oder
wobei die Ventilklappe (5) eine von dem Außenrand (53) begrenzte und dem Einlass (1) zugewandte erste Oberfläche (51) aufweist, welche wenigstens im ersten Flächenabschnitt einer inneren Mantelfläche eines Zylindersegments entspricht oder welche wenigstens im ersten Flächenabschnitt einer inneren Fläche eines Kugelsegments entspricht.

3. Dreiwege-Klappe (4) nach Anspruch 2,
wobei die Ventilklappe (5) eine von dem Außenrand (53) begrenzte und dem Einlass (1) abgewandte zweite Oberfläche (52) aufweist, welche von der ersten Oberfläche (51) beabstandet ist und welche wenigstens im ersten Flächenabschnitt konvex ist; und/oder
wobei die Ventilklappe (5) eine von dem Außenrand (53) begrenzte und dem Einlass (1) abgewandte zweite Oberfläche (52) aufweist, welche von der ersten Oberfläche (51) beabstandet ist und welche wenigstens im Bereich des ersten Flächenabschnitts einer äußeren Mantelfläche eines Zylindersegments entspricht oder welche wenigstens im Bereich des ersten Flächenabschnitts einer äußeren Fläche eines Kugelsegments entspricht.

4. Dreiwege-Klappe (4) nach Anspruch 1,
wobei die Ventilklappe (5) eine von dem Außenrand (53) begrenzte und dem Einlass (1) zugewandte erste Oberfläche (51) und eine von dem Außenrand (53) begrenzte und dem Einlass (1) abgewandte zweite Oberfläche (52) aufweist, wobei die zweite Oberfläche (52) von der ersten Oberfläche (51) beabstandet ist; und
wobei eine gerade Verbindungsstrecke zwischen zwei Punkten auf dem Außenrand (53) um wenigstens 5 % oder um wenigstens 10 % oder um wenigstens 20 % kürzer als die kürzeste in der ersten Oberfläche liegende Verbindungslinie zwischen diesen beiden Punkten ist.

5. Dreiwege-Klappe (4) nach einem der Ansprüche 1 bis 4, wobei die Krümmung der Ventilklappe (5) wenigstens im ersten Flächenabschnitt einen Krümmungsradius kleiner 1,00 m oder einen Krümmungsradius kleiner 0,50 m oder einen Krümmungsradius kleiner 0,25 m aufweist.

6. Dreiwege-Klappe (4) nach einem der Ansprüche 1 bis 5,
wobei die Ventilklappe (5) einen zweiten Flächenabschnitt (A2) und einen dritten Flächenabschnitt (A3) aufweist;
wobei der erste Flächenabschnitt (A1) zwischen dem zweiten und dem dritten Flächenabschnitt (A2, A3) angeordnet ist; und
wobei die Ventilklappe (5) im zweiten und dritten Flächenabschnitt (A2, A3) eine Krümmung aufweist, die von der Krümmung im ersten Flächenabschnitt (A1) verschieden oder gleich Null ist.

7. Dreiwege-Klappe (4) nach Anspruch 6,
wobei die Ventilklappe (5) im ersten Flächenabschnitt (A1) die Form eines Kugelsegments aufweist, und im zweiten und dritten Flächenabschnitt (A2, A3) jeweils die Form eines Kegelstumpfsegments aufweist; oder
wobei die Ventilklappe (5) im ersten Flächenabschnitt (A1) die Form eines Zylindersegments aufweist, und im zweiten und dritten Abschnitt (A2, A3) jeweils keine Krümmung aufweist.

8. Dreiwege-Klappe (4) nach Anspruch 6 oder 7,
wobei die Ventilklappe (5) ausgebildet ist, um die Schwenkachse (54) gedreht zu werden; und
wobei sich der erste Flächenabschnitt (A1) bezogen auf die Schwenkachse (54) über einen ersten Winkel (α) von zwischen 50° und 130° erstreckt, und sich der zweite und dritte Flächenabschnitt (A2, A3) jeweils über einen zweiten Winkel (β) erstreckt, wobei der zweite Winkel gleich der halben Differenz zwischen 180° und dem ersten Winkel (α) ist.

9. Dreiwege-Klappe (4) nach einem der Ansprüche 1 bis 8,
wobei das Leitblech (56) eine dem Einlass (1) zugewandte Oberfläche (57) aufweist, welche konkav ist; und/oder
wobei das Leitblech (56) eine dem Einlass (1) zugewandte Oberfläche (57) aufweist, welche einer inneren Mantelfläche eines Zylindersegments oder einer inneren Fläche eines Kugelsegments entspricht.

10. Dreiwege-Klappe (4) nach einem der Ansprüche 1 bis 9, wobei die Ventilklappe (5) auf einer von dem Außenrand (53) begrenzten und dem Einlass (1) abgewandten zweiten Oberfläche (52) wenigstens einen Vorsprung (55) aufweist.

## Claims

1. A three-way flap (4) comprising:
an inlet (1);
a first outlet (2);
a second outlet (3); and
a valve flap (5) moveable between at least a first position and a second position, with fluid flowing in through the inlet (1) being directed to the first outlet (2), when the valve flap (5) is in the first position, and fluid flowing in through the inlet (1) being directed to the second outlet (3), when the valve flap (5) is in the second position;
whereby a surface (51) of the valve flap (5) circumscribed by an outer edge (53) comprises at least one first surface section (A1), where the surface of the valve flap (5) has a curvature;
whereby the three-way flap (4) further comprises a valve body (6);
whereby the valve flap (5) is located inside the valve body (6), and the inlet (1), and the first and second outlets (2, 3) are formed in the valve body (6); and
whereby a pivot axis (54) of the valve flap (5) passes straight through the valve body (6);
**characterized in that**
the pivot axis (54) supports a curved baffle plate (56); and
the valve body (6) comprises on its inside wall opposite the inlet (1) a protrusion (61) oriented towards the inlet (1) and extending between two bearings enabling a pivoting movement of the valve flap (5), such that an abutting of the valve flap (5) on an inside wall of the valve body (6) is limited to a small area.

2. The three-way flap (4) according to claim 1,
whereby the valve flap (5) comprises a first surface (51) circumscribed by the outer edge (53) and facing towards the inlet (1), the first surface (51) being concave in at least the first surface section; and/or
whereby the valve flap (5) comprises a first surface (51) circumscribed by the outer edge (53) and facing towards the inlet (1), corresponding, in at least the first surface section, to an inner side surface of a cylinder segment or corresponding, in at least the first surface section, to an inner surface of a spherical segment.

3. The three-way flap (4) according to claim 2,
whereby the valve flap (5) comprises a second surface (52) circumscribed by the outer edge (53) and facing away from the inlet (1), the second surface (52) being spaced apart from the first surface (51) and being convex in at least the first surface section; and/or
whereby the valve flap (5) comprises a second surface (52) circumscribed by the outer edge (53) and facing away from the inlet (1), the second surface (52) being spaced apart from the first surface (51) and corresponding to an outer side surface of a cylinder segment in at least the region of the first surface section or corresponding to an outer side of a spherical segment in the region of the first surface section.

4. The three-way flap (4) according to claim 1,
whereby the valve flap (5) comprises a first surface (51) circumscribed by the outer edge (53) and facing towards the inlet (1), and a second surface (52) circumscribed by the outer edge (53) and facing away from the inlet (1), with the second surface (52) being spaced apart from the first surface (51); and
whereby a straight line segment connecting two points on the outer edge (53) is shorter by at least 5 %, or at least 10 %, or at least 20 % than the shortest line segment in the first surface connecting the two points.

5. The three-way flap (4) according to one of claims 1 to 4, whereby the curvature of the valve flap (5) has, at least in the first surface section, a radius of curvature smaller than 1.00 m, or a radius of curvature smaller than 0.50 m, or a radius of curvature smaller than 0.25 m.

6. The three-way flap (4) according to one of claims 1 to 5,
whereby the valve flap (5) comprises a second surface section (A2) and a third surface section (A3);
whereby the first surface section (A1) is located between the second and the third surface sections (A2, A3); and
whereby the valve flap (5) comprises a curvature in the second and third surface section that differs from the curvature in the first surface section (A1) or equals zero.

7. The three-way flap (4) according to claim 6,
whereby the valve flap (5) is shaped like a spherical segment in the first surface section (A1), and shaped like a truncated cone segment in the second and third surface sections (A2, A3); or
whereby the valve flap (5) is shaped like a cylinder segment in the first surface section (A1) and is not curved in each of the second and third sections (A2, A3).

8. The three-way flap (4) according to claim 6 or 7,
whereby the valve flap (5) is adapted for rotation around the pivot axis (54); and
whereby the first surface section (A1) extends around a first angle (α) of between 50° and 130° with respect to the pivot axis (54), and the second and third surface sections (A2, A3) each extend around a second angle (β), the second angle being equal to half of the difference between 180° and the first angle (α).

9. The three-way flap (4) according to one of claims 1 to 8,
whereby the baffle plate (56) comprises a concave surface (57) facing towards the inlet (1); and/or
whereby the baffle plate (56) comprises a surface (57) facing towards the inlet (1), the surface corresponding to an inner side surface of a cylinder segment or to an inner surface of a spherical segment.

10. The three-way flap (4) according to one of claims 1 to 9 whereby the valve flap (5) comprises at least one protrusion (55) on a second surface (52) circumscribed by the outer edge (53) and facing away from the inlet (1).

## Revendications

1. Clapet à trois voies (4), avec :
une entrée (1) ;
une première sortie (2) ;
une deuxième sortie (3) ; et
un clapet de vanne (5) réglable au moins entre une première et une deuxième position, dans lequel dans la première position du clapet de vanne (5), un fluide affluant par l'entrée (1) est guidé vers la première sortie (2), et dans la deuxième position du clapet de vanne (5), un fluide affluant par l'entrée (1) est guidé vers la deuxième sortie (3) ;
dans lequel une surface (51) du clapet de vanne (5) limitée par un bord extérieur (53) présente au moins une première section de surface (A1), dans laquelle la surface du clapet de vanne (5) présente une courbure ;
dans lequel le clapet à trois voies (4) présente en outre un corps de vanne (6) ;
dans lequel le clapet de vanne (5) est agencé à l'intérieur du corps de vanne (6), et l'entrée (1) et les première et deuxième sorties (2, 3) sont disposées dans le corps de vanne (6) ; et
dans lequel un axe de pivotement (54) du clapet de vanne (5) traverse de manière rectiligne le corps de vanne (6) ;
**caractérisé en ce que**
l'axe de pivotement (54) porte un déflecteur incurvé (56) ; et
le corps de vanne (6) présente au niveau de sa paroi intérieure opposée à l'entrée une saillie (61), qui est orientée vers l'entrée (1) et s'étend entre deux paliers, qui permettent un mouvement de pivotement du clapet de vanne (5), si bien qu'une application du clapet de vanne (5) sur une paroi intérieure du corps de vanne (6) est limitée à une petite zone.

2. Clapet à trois voies (4) selon la revendication 1,
dans lequel le clapet de vanne (5) présente une première surface (51) limitée par le bord extérieur (53) et tournée vers l'entrée (1), laquelle est concave au moins dans la première section de surface ; et/ou
dans lequel le clapet de vanne (5) présente une première surface (51) limitée par le bord extérieur (53) et tournée vers l'entrée (1), laquelle correspond au moins dans la première section de surface à une surface d'enveloppe intérieure d'un segment de cylindre ou laquelle correspond au moins dans la première section de surface à une surface intérieure d'un segment sphérique.

3. Clapet à trois voies (4) selon la revendication 2,
dans lequel le clapet de vanne (5) présente une deuxième surface (52) limitée par le bord extérieur (53) et opposée à l'entrée (1), laquelle est espacée de la première surface (51) et laquelle est convexe au moins dans la première section de surface ; et/ou
dans lequel le clapet de vanne (5) présente une deuxième surface (52) limitée par le bord extérieur (53) et opposée à l'entrée (1), laquelle est espacée de la première surface (51) et laquelle correspond au moins dans la zone de la première section de surface à une surface d'enveloppe extérieure d'un segment de cylindre ou laquelle correspond au moins dans la zone de la première section de surface à une surface extérieure d'un segment sphérique.

4. Clapet à trois voies (4) selon la revendication 1,
dans lequel le clapet de vanne (5) présente une première surface (51) limitée par le bord extérieur (53) et tournée vers l'entrée (1) et une deuxième surface (52) limitée par le bord extérieur (53) et opposée à l'entrée (1), dans lequel la deuxième surface (52) est espacée de la première surface (51) ; et
dans lequel un trajet de liaison rectiligne entre deux points sur le bord extérieur (53) est inférieur d'au moins 5 % ou d'au moins 10 % ou d'au moins 20 % à la ligne de liaison la plus courte située sur la première surface entre ces deux points.

5. Clapet à trois voies (4) selon l'une quelconque des revendications 1 à 4, dans lequel la courbure du clapet de vanne (5) présente au moins dans la première section de surface un rayon de courbure inférieur à 1,00 m ou inférieur à 0,50 m ou inférieur à 0,25 m.

6. Clapet à trois voies (4) selon l'une quelconque des revendications 1 à 5,
dans lequel le clapet de vanne (5) présente une deuxième section de surface (A2) et une troisième section de surface (A3) ;
dans lequel la première section de surface (A1) est agencée entre la deuxième et la troisième section de surface (A2, A3) ; et
dans lequel le clapet de vanne (5) présente dans la deuxième et la troisième section de surface (A2, A3) une courbure, qui est différente de la courbure dans la première section de surface (A1) ou égale à zéro.

7. Clapet à trois voies (4) selon la revendication 6,
dans lequel le clapet de vanne (5) présente dans la première section de surface (A1) la forme d'un segment sphérique, et dans la deuxième et troisième section de surface (A2, A3) présente respectivement la forme d'un segment de cône tronqué ; ou
dans lequel le clapet de vanne (5) présente dans la première section de surface (A1) la forme d'un segment de cylindre, et dans la deuxième et troisième section (A2, A3) ne présente respectivement aucune courbure.

8. Clapet à trois voies (4) selon la revendication 6 ou 7,
dans lequel le clapet de vanne (5) est disposé à rotation autour de l'axe de pivotement (54) ; et
dans lequel la première section de surface (A1) s'étend par rapport à l'axe de pivotement (54) sur un premier angle (α) entre 50° et 130°, et la deuxième et troisième section de surface (A2, A3) s'étend respectivement sur un deuxième angle (β), dans lequel le deuxième angle est égal à la moitié de la différence entre 180° et le premier angle (α).

9. Clapet à trois voies (4) selon l'une quelconque des revendications 1 à 8,
dans lequel le déflecteur (56) présente une surface (57) tournée vers l'entrée (1), laquelle est concave ; et/ou
dans lequel le déflecteur (56) présente une surface (57) tournée vers l'entrée (1), laquelle correspond à une surface d'enveloppe intérieure d'un segment de cylindre ou à une surface intérieure d'un segment sphérique.

10. Clapet à trois voies (4) selon l'une quelconque des revendications 1 à 9, dans lequel le clapet de vanne (5) présente au moins une saillie (55) sur une deuxième surface (52) limitée par le bord extérieur (53) et opposée à l'entrée (1).
